# EUROPÄISCHE PATENTSCHRIFT

(11) **EP 1 899 197 B1**
(45) Veröffentlichungstag und Bekanntmachung des Hinweises auf die Patenterteilung: **13.10.2010**
(21) Anmeldenummer: 06755224.0
(22) Anmeldetag: 17.05.2006
(51) Int. Cl.: B60R 16/02, B60K 35/00

(54) **FAHRERINFORMATIONSVORRICHTUNG**
DRIVER INFORMATION DEVICE
DISPOSITIF D'INFORMATION DE CONDUCTEUR

(30) Priorität: 29.06.2005 DE 102005030213
(43) Veröffentlichungstag der Anmeldung: 19.03.2008
(73) Patentinhaber: ROBERT BOSCH GMBH, 70442 Stuttgart (DE)
(72) Erfinder: PLACKE, Lars, 30163 Hannover (DE); DORNA, Michael, 74321 Bietigheim-Bissingen (DE)
(86) Internationale Anmeldenummer: PCT/EP2006/062364
(87) Internationale Veröffentlichungsnummer: WO 2007/000376

(56) Entgegenhaltungen:
- DE-A1- 19 638 703
- DE-A1- 19 961 871
- US-A- 5 089 826
- US-A1- 2004 204 157
- US-B1- 6 434 450

## Beschreibung

### Stand der Technik

Die Erfindung geht aus von einer Fahrerinformationsvorrichtung nach der Gattung des Hauptanspruchs. Es sind bereits Fahrerinformationsvorrichtungen bekannt, mittels derer dem Fahrer eine Vielzahl von Informationen ausgegeben werden können. Diese Informationen können einerseits eine Fahrsituation selbst, Anweisungen für den Fahrer, aber auch sonstige Informationen betreffen, z.B. einen eingehenden Telefonanruf. Diese Informationen werden möglicherweise zu einem Zeitpunkt an den Fahrer ausgegeben, an dem die Information den Fahrer stört.

Aus der DE 197 23 922 A1 ist eine Signalanzeigevorrichtung zum Anzeigen eines Systemzustandes in einem Fahrzeug bekannt. Die Signalanzeigevorrichtung weist einen Logikkreis auf, der über ein Signal eine Verzögerungseinheit aktiviert, wenn eine anstrengende Fahrsituation vorliegt und/oder eine Regelung momentan von dem Fahrer durchgeführt wird. Hierdurch wird der Fahrer zeitweise von der Präsentation neuer Informationen während solcher Fahrsituationen entlastet, wenn seine Konzentration für andere vorübergehende Aufgaben notwendig ist.

Aus der DE 199 61 871 A1 ist eine Fahrerinformation eines Kraftfahrzeugs und eine hierfür bestimmte Fahrerinformationseinrichtung bekannt, bei der mittels Sensoren verschiedene Betriebsdaten des Fahrzeugs erfasst und einer Steuereinheit zugeführt werden. Die Steuereinheit stellt daraus unter Berücksichtigung des momentanen Betriebszustands eine Rangfolge derjenigen Betriebsdaten zusammen, die für den Fahrer unter den aktuellen Betriebsbedingungen relevant und nützlich sind. Der Fahrer wird auf diese Weise bedarfsgerecht mit Informationen versorgt.

Aus der W02005/022481A ist ein Informationsausgabesystem eines Fahrzeugs bekannt, wobei zur Informationsausgabe mehrere Sinneskanäle auswählbar sind. Hierbei wird bei einer Ausgabe von zwei Informationen über den selben Sinneskanal ein Zeitbedarf für die Ausgabe der ersten und der zweiten Information ermittelt. Abhängig von dem Zeitbedarf wird die Ausgabe der Information mit dem längeren Zeitbedarf zeitlich gegenüber der Ausgabe der Information mit dem kürzeren Zeitbedarf verzögert.

Aus der EP 1 508 476 A2 ist ein Fahrerassistenzsystem für Kraftfahrzeuge bekannt, bei dem ein Warnsignal mit einer blinkenden Leuchtdiode ausgegeben wird. Nach einer Pause von 100 ms erfolgt ein zweites Lenksignal mit einer verringerten Leuchtdichte.

### Vorteile der Erfindung

Die erfindungsgemäße Fahrerinformationsvorrichtung mit den Merkmalen des Hauptanspruchs hat demgegenüber den Vorteil, dass zwischen mehreren, an den Fahrer ausgegebenen Informationen eine Pause vorgegebener Länge eingefügt wird. Durch die Pause werden die beiden auszugebenden Informationen für den Fahrer zeitlich getrennt. Der Fahrer kann somit beide an ihn ausgegebene Informationen besser wahrnehmen. Insbesondere wird vermieden, dass der Fahrer möglicherweise die Informationen miteinander vermischt oder die nachfolgende Information den Fahrer bei der Verarbeitung der ersten Information stört. Insbesondere wird es durch eine entsprechend vorgegebene Pause dem Fahrer ermöglicht, eine auf die erste, ihm gegebene Information erforderliche Handlung zunächst abzuschließen, bevor die zweite Information ausgegeben wird. Durch das Festlegen einer vorgegebenen Pause ist es dabei nicht notwendig, die Durchführung der Handlung durch den Fahrer selbst auszuwerten. Durch die bessere Information des Fahrers wird insgesamt hierbei die Belastung des Fahrers durch die ihm gegebenen Informationen verringert, so dass die Fahrsicherheit erhöht wird.

Durch die in den Unteransprüchen aufgeführten Maßnahmen sind vorteilhafte Weiterbildungen und Verbesserungen der im Hauptanspruch angegebenen Fahrerinformationsvorrichtung möglich. Besonders vorteilhaft ist es, dass die Länge der Pause von dem Inhalt und/oder der Form der ersten bzw. der zweiten Information abhängt. Durch die Berücksichtigung der Form der Informationen kann die Geschwindigkeit der Sinneswahrnehmung für unterschiedliche Wahrnehmungswege durch den Fahrer berücksichtigt werden. Ferner ist es möglich, hinsichtlich des Inhaltes die Komplexität der Information zu berücksichtigen, so dass insgesamt vor und/oder nach einer komplexeren Information eine längere Pause gelassen wird, als bei einer einfachen Information. Insbesondere ist es vorteilhaft, dass bei einer Information, die von dem Fahrer eine Handlung erfordert, ihm Zeit gelassen wird, die jeweilige Handlung durchzuführen. Ferner kann sichergestellt werden, dass bei einer Ausgabe von Informationen niedriger Priorität vor der Ausgabe dieser Information eine hinreichende Pause gelassen wird, damit die Ausgabe niedriger Priorität dem Fahrer nicht bei einer Verarbeitung einer zuvor ausgegebenen möglicherweise wichtigeren Information ablenkt. Insbesondere ist es vorteilhaft, die Länge der Pause an eine Fahrsituation anzupassen. Ist der Fahrer während der Fahrt höher belastet, z.B. bei einer schlechten Witterung oder bei einer hohen Geschwindigkeit, so können die Pausen zwischen den an ihn ausgegebenen Informationen verlängert werden, um insgesamt die Belastung bei der Wahrnehmung und Verarbeitung für den Fahrer zu verringern.

Ferner ist es vorteilhaft, eine Regeleinheit vorzusehen, die es dem Fahrer ermöglicht, die Länge der Pause selbst zu variieren. Hiermit kann ein Fahrer, der möglicherweise eine längere Pause zwischen verschiedenen Informationsausgaben wünscht, die Pausendauer manuell verlängern bzw. im umgekehrten Fall verkürzen.

Erfindungsgemäß ist eine Speichereinheit vorgesehen, in der für verschiedene Inhalte von Informationen bzw. Formen von Informationen oder auch für unterschiedliche Fahrsituationen verschiedene Pausenlängen abgelegt sind. Hierdurch kann die entsprechende Pausenlänge auf einfache Weise während der Fahrt automatisch eingestellt und nachgeregelt werden.

Weiterhin ist es vorteilhaft, eine Warneinheit vorzusehen, die eine Pause dann beendet, wenn eine wichtige Warnung ansteht. Solche Informationen können z.B. einen Ausfall eines wichtigen Fahrzeugsystems betreffen, z.B. einen Ausfall des Bremssystems. Eine derartige Information sollte unverzüglich an einen Fahrer ausgegeben werden, unabhängig von zuvor ausgegebenen Informationen.

### Zeichnung

Ausführungsbeispiele der Erfindung sind in der Zeichnung darstellt und in der nachfolgenden Beschreibung näher erläutert. Es zeigen
- Figur 1: eine erfindungsgemäße Fahrerinformationsvorrichtung,
- Figur 2: einen zeitlichen Ablauf einer Ausgabe von Warnungen nach einem erfindungsgemäßen Verfahren zur Ausgabe von Informationen.

### Beschreibung des Ausführungsbeispiels

Die erfindungsgemäße Fahrerinformationsvorrichtung kann für beliebige Fahrzeuge verwendet werden. Im Folgenden wird sie am Beispiel einer Verwendung in einem Kraftfahrzeug erläutert.

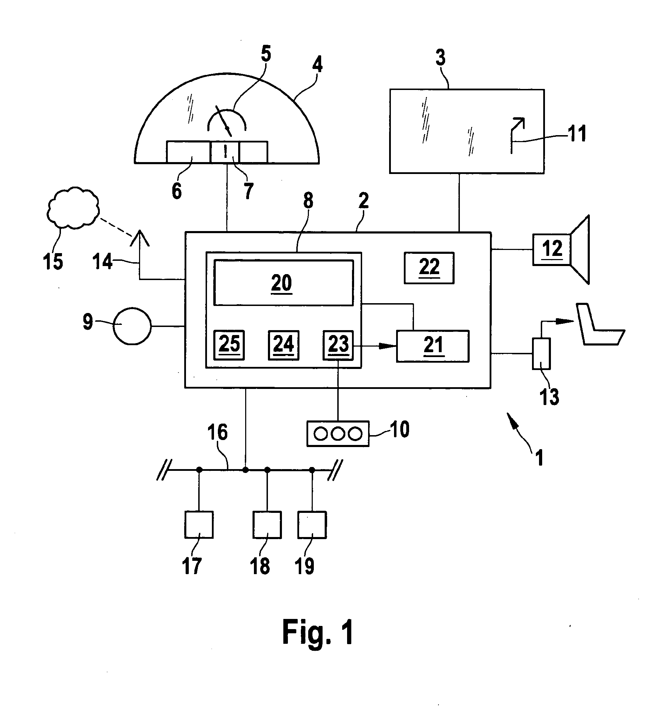

In der Figur 1 ist eine erfindungsgemäße Fahrerinformationseinrichtung 1 gezeigt, die eine Zentraleinheit 2 aufweist. An die Zentraleinheit 2 ist eine erste Anzeige 3 angeschlossen, die in einer Mittelkonsole des Fahrzeugs angeordnet ist. Alternativ oder ergänzend hierzu ist ein Kombinationsinstrument 4 an die Zentraleinheit 2 angeschlossen, das vor dem Fahrer im Fahrzeug angeordnet ist und das z.B. über eine Zeigeranzeige 5 einen Fahrer über die aktuelle Geschwindigkeit des Fahrzeugs informiert. Ferner können in dem Kombinationsinstrument 4 auch Warnanzeigen 6 angeordnet sein, von denen in der Figur 1 eine Anzeige mit einem Warnsymbol 7 beispielhaft aktiviert ist. Die Fahrerinformationsvorrichtung 1 steuert die Anzeigen 3, 4 an, indem sie Informationen an die Anzeigen 3, 4 überträgt. Hierzu ist eine Recheneinheit 8 in der Zentraleinheit 2 vorgesehen.

Die Fahrerinformationsvorrichtung 1 kann dabei eine Vielzahl von Funktionen in dem Fahrzeug übernehmen. Beispielhaft können dies z.B. sein:
Eine Radiofunktion zur Wiedergabe eines empfangenen Radioprogramms,
eine Musikwiedergabefunktion zur Wiedergabe von Musiktiteln, die auf einer Speichereinheit in einem Datenträgerlaufwerk 9 abgelegt sind,
eine Navigationsfunktion zur Ausgabe von Fahrhinweisen, z.B. in Form einer Pfeildarstellung 11 in der Anzeige 3,
eine Warnfunktion zur Ausgabe von Warnungen über das Kombinationsinstrument 4.

Zur akustischen Ausgabe ist ein Lautsprecher 12 an die Zentraleinheit 2 angeschlossen. Ferner ist es auch möglich, eine Warnung haptisch auszugeben. Hierzu wird von der Zentraleinheit 2 ein haptischer Geber 13 angesteuert, der bei Betrieb zu einer Vibration des Lenkrades und/oder des Fahrersitzes führt. Ferner kann die Zentraleinheit 2 auch als eine Telekommunikationseinheit dienen. Z.B. kann die Zentraleinheit 2 über eine entsprechende Schnittstelle 14 eine Funkverbindung zu einem Datennetz 15, z.B. einem Mobilfunknetz, außerhalb des Fahrzeugs herstellen. Diese Verbindung kann über eine am Fahrzeug angeordnete Antenne oder über eine Funkverbindung zu einer Kommunikationseinheit im Fahrzeug erfolgen, z.B. mittels des Blue-Tooth-Protokolls.

Ferner sind bevorzugt über einen Datenbus 16 Sensoren an die Zentraleinheit 2 angeschlossen. Dies können ein Geschwindigkeitssensor 17, ein Regensensor 18 und/oder ein Radarsensor 19 zur Überwachung der Straße vor dem Fahrzeug sein. Ferner weist die Fahrerinformationsvorrichtung 1 eine Bedieneinheit 10 auf, mit der die Fahrerinformationsvorrichtung 1 gesteuert wird. Die Recheneinheit 8 weist insbesondere eine Programmblock 20 auf, der die Ausgabe der verschiedenen Informationen über die unterschiedlichen Ausgabemittel im Fahrzeug steuert. So wird festgelegt, über welches Ausgabemittel 3, 4, 12, 13 im Fahrzeug eine Information ausgegeben wird. Die Programmeinheit 20 stellt zunächst fest, dass eine Information auf wenigstens einem der Ausgabemittel ausgegeben werden muss. Durch Rückgriff auf eine Speichereinheit 21 bestimmt die Programmeinheit 20, wann diese Information ausgegeben werden soll. Hierzu verfügt die Zentraleinheit 2 über eine Uhrenschaltung 22, mit der eine Zeitbestimmung möglich ist. In der Speichereinheit 21 sind die Dauern von Pausen abgelegt, die zwischen verschiedenen Informationsausgaben eingehalten werden sollen. Die Programmeinheit 20 berücksichtigt diese Pausendauem während der Ausgabe. In der Recheneinheit 8 ist ferner bevorzugt in Software eine Regeleinheit 23 implementiert, die es einem Benutzer ermöglicht, über die Bedieneinheit 10 die Pausendauern zu ändern. Eine Änderung kann z.B. in der Festlegung eines Faktors liegen, mit dem vorgegebene Pausendauem multipliziert werden. Eine Änderung wird bevorzugt in der Speichereinheit 21 abgelegt. Ferner ist eine Bewertungseinheit 24 vorgesehen, bei der zusätzlich die über die Sensoren 17, 18, 19 bzw. gegebenenfalls die über weitere Sensoren erfasste Fahrsituation berücksichtigt wird. In Abhängigkeit von der Fahrsituation wird die Pausendauer angepasst. Ferner ist eine Warneinheit 25 vorgesehen, die für den Fall, dass eine Warnung mit besonderer Wichtigkeit auszugeben ist, jede Pause für die Ausgabe der besonders wichtigen Warnung beenden kann, um die Warnung auszugeben.

Im Folgenden sind in Tabellenform Beispiele für die unterschiedliche Beeinflussung der Pausenlänge in Abhängigkeit von Inhalt einer Information, Form einer Information und Fahrsituation angegeben. Diese Abhängigkeiten können dabei in einer ersten Ausführungsform jeweils nur einzeln implementiert sein. Es ist aber auch möglich, zwei oder jeweils alle Abhängigkeit miteinander zu kombinieren. In einer ersten Ausführungsform wird hierbei jeweils die in der Tabelle jeweils angegebene, längste Pausenzeit gewählt. In einer weiteren Ausführungsform können die Pausenzeiten auch additiv berücksichtigt werden, so dass sich die in den Tabellen angegebenen Pausenzeiten jeweils addieren. Ferner ist es auch möglich, dass z.B. für Inhalt und Form jeweils die Pausenzeiten addiert werden, während in Abhängigkeit von der Fahrsituation die sich ergebende Summe mit einem entsprechenden Faktor multipliziert wird. Im Folgenden sind dabei Beispiele angegeben, in dem für jede Information eine Mindestpause vor der Informationsausgabe und nach der Informationsausgabe angegeben ist. Folgen in der Ausgabe zwei Informationen aufeinander, so muss zumindest das Maximum der Pausenzeit nach der ersten Information und vor der zweiten Information eingehalten werden. In einer weiteren Ausführungsform können sich diese Pausenzeiten aber auch addieren.

Im Folgenden ist mit dem Ausdruck "vor" die vor der Ausgabe der Information einzuhaltende Pausenlänge angegeben und mit dem Ausdruck "nach" die nach der Ausgabe der Information einzuhaltende Pausendauer. In Klammern sind jeweils Beispiele für die jeweilige Information, bzw. Art der Informationsausgabe oder Situation angegeben.
1. Abhängigkeit vom Inhalt der auszugebenden Information
   - Warnung mit erforderlicher Fahrerhandlung: vor 0 s, nach 5 s
      (Übernahmeaufforderung bei abstandsgeregeltem Folgefahren, Anhalteauffordenung z.B. bei zu geringem Öldruck, Hinweis auf nicht angelegten Gurt)
   - Informationsausgabe ohne direkte Fahrerhandlung: vor 1 s, nach 3 s
      (Ölstand in Ordnung, Information über Zustand der Lichtautomatik, Hinweis auf kalten Motor)
   - Fahrhinweis der Navigationsvorrichtung: vor 1 s, nach 4 s
      (z.B. Abbiegehinweis)
   - eingehender Telefonanruf: vor 5 s, nach 1 s
2. Abhängigkeit von der Form der auszugebenden Information
   - Anzeigeinformation: vor 2 s, nach 2 s
      (z.B. Warnsymbol- im Kombinationsinstrument, Abbiegepfeil in der Mittelkonsole)
   - Akustische Textausgabe: vor 1 s, nach 3 s
      (z.B. ein Abbiegehinweis des Navigationssystems)
   - Warnton: vor 1 s, nach 2 s
      (z.B. bei nicht angelegtem Gurt oder bei zu geringem Abstand zu einem Hindernis
   - Haptischer Alarm: vor 1 s, nach 1 s
      (z.B. Lenkradvibration, Sitzvibration bei einer Spurverlassenswarnung)
3. Abhängigkeit von der Fahrsituation
   - Normale Fahrsituation: vor 1 s, nach 1 s
   - Nasse Fahrbahn: vor 2 s, nach 2 s
      (z.B. bei eingeschalteten Scheibenwischern)
   - Hohe Fahrzeuggeschwindigkeit: vor 3 s, nach 3 s
      (z.B. bei einem Überschreiten einer Geschwindigkeit von 130 km/h)

Wird in einer Ausführungsform die Fahrsituation mit einer Abhängigkeit vom Inhalt und/oder der Form der auszugebenden Information kombiniert, kann die Dauer der Pause bei einer normalen Fahrsituation unverändert bleiben, während die Dauer der Pause bei Regen um 50%, bei einer hohen Geschwindigkeit auch um 50% und bei einer hohen Geschwindigkeit bei Regen um 100% gegenüber dem sich aus der Abhängigkeit von Inhalt und/oder Form ergebenden Pausendauer verlängert wird.

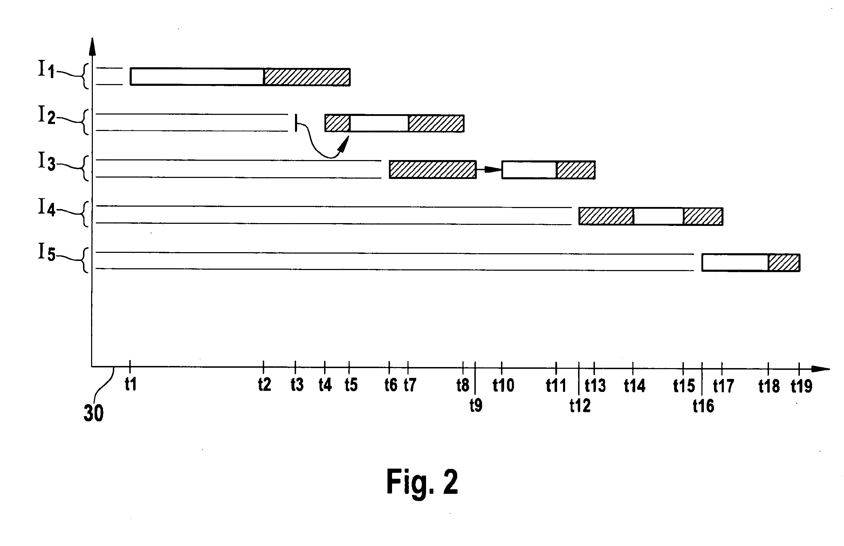

In der Figur 2 ist ein Zeitablaufdiagramm für unterschiedliche Warnungen dargestellt. Auf der X-Achse 30 sind hierzu die verschiedenen Zeitpunkte T1 bis T19 in chronologischer Reihenfolge aufgetragen. Auf der Y-Achse sind die zeitlich aufeinander folgenden Informationen I1 bis I5 aufgetragen. Ein nicht schraffierter Balken stellt dabei in der Figur 2 die tatsächliche Dauer der Informationsausgabe dar. Ein schraffierter Balken stellt die sich vor oder nach der Informationsausgabe jeweils anschließende Mindestpausenzeit dar.

Das die Information I1 auslösende Ereignis tritt zu dem Zeitpunkt T1 ein. Die Information I1 wird hierbei unverzüglich ausgegeben. Sie dauert bis zu dem Zeitpunkt T2 an. Mit der Information I1 ist eine Mindestdauer einer Pause nach der Ausgabe der Information bis zu einem Zeitpunkt T5 verknüpft. Zu dem Zeitpunkt T3 ereignet sich ein Ereignis, aufgrund dessen die Ausgabe der Information I2 ausgelöst werden soll. Während der Dauer der Pause nach der Information I1 wird die Information I2 zunächst nicht ausgegeben. Vielmehr verschiebt sich der Beginn der Ausgabe der Information auf den Zeitpunkt T5. Der Information I2 ist eine Mindestpause vor der Ausgabe der Information I2 zugeordnet. Diese Mindestpause beträgt das Zeitintervall T4 bis T5. Da das Zeitintervall T4 bis T5 jedoch kürzer ist als das Zeitintervall T2 bis T5 ist diese Mindestdauer bei dem hier gezeigten Ausführungsbeispiel unbeachtlich. Die Ausgabe der Information I2 dauert bis zum Zeitpunkt T7 an.

Die Information I1 könnte z.B. eine Übemahmeaufforderung eines abstandsgeregelten Folgefahrens sein. Hierbei wird festgestellt, dass eine mittels eines Radarsensors vorgenommene automatische Abstandsregelung zu einem vorausfahrenden Fahrzeug aufgrund der geringen Geschwindigkeit des vorausfahrenden Fahrzeugs nicht mehr erfolgen kann. In dem Zeitintervall T2 bis T5 hat ein Fahrer nun Gelegenheit, selber wieder die Geschwindigkeitsregelung des Fahrzeugs zu übernehmen. Die Information I2 könnte ein Fahrhinweis sein, z.B. ein Abbiegehinweis. Da der Abbiegehinweis entsprechend rechtzeitig vor einem Abbiegen ausgegeben werden soll gemäß dem Zeitpunkt T3, ist die geringfügig spätere Ausgabe nicht störend. Vielmehr kann der Fahrer nun zunächst die Geschwindigkeitsregelung des Fahrzeugs wieder übernehmen, um anschließend kontrolliert gemäß dem Fahrhinweis den Abbiegevorgang einzuleiten.

Das die Information I3 auslösende Ereignis tritt zu dem Zeitpunkt T6 ein. Während dieser Zeit wird noch die Information I2 ausgegeben. An die Ausgabe der Information I2 schließt sich eine Mindestpause von dem Zeitpunkt T7 bis zu einem Zeitpunkt T8 an. Für die Ausgabe der Information I3 ist jedoch vor der Ausgabe der Information eine Mindestpause von dem Zeitpunkt T6 bis zu dem Zeitpunkt T9 vorgesehen. Dieses Zeitintervall, das größer als das Zeitintervall T7 bis T8 ist, schließt sich an den Zeitpunkt T7 an, so dass die Information I3 erst zu dem Zeitpunkt T10 ausgegeben wird, da mit einer Pause von dem Zeitpunkt T7 bis zu dem Zeitpunkt T10 auch eine Pause entsprechend dem Zeitintervall T6 bis T9 eingehalten wird. Die Information I3 könnte z.B. ein Hinweis auf einen eingehenden Anruf sein.

Die Ausgabe der Information I3 dauert von dem Zeitpunkt T10 bis zu dem Zeitpunkt T11 an. Hieran schließt sich eine Mindestpausendauer von dem Zeitpunkt T11 bis zu dem Zeitpunkt T13 an. Zu dem Zeitpunkt T14 tritt das die Information I4 auslösende Ereignis ein. Vor der Ausgabe der Information I4 ist eine Mindestpausendauer von dem Zeitpunkt T12 bis zu dem Zeitpunkt T14 einzuhalten. Zwischen dem Zeitpunkt T11, dem Ende der Ausgabe der Information I3 und dem Zeitpunkt T14, dem Beginn der Ausgabe der Information I4, wird jedoch eine Pause eingehalten, die sowohl größer ist als das Zeitintervall T11 bis T13, als auch als das Zeitintervall T12 bis T14. Daher wird die Information I4 bereits zu dem Zeitpunkt T14 ausgegeben. Eine Verzögerung erfolgt hierbei nicht.

Die Information T14, z.B. ein Hinweis darauf, dass demnächst ein Tanken erforderlich ist, wird bis zu dem Zeitpunkt T15 ausgegeben. Zu dem Zeitpunkt T16 tritt das die Information 15 auslösende Ereignis ein. Die Information 15 betrifft z.B. ein erforderliches sofortiges Anhalten des Fahrzeugs, z.B. einen technischen Defekt, beispielsweise ein Ausfall der Lichtmaschine oder eine Störung des Airbag-Systems. Diese Information soll an den Fahrer sofort ausgegeben werden. Eine entsprechende Berechtigung ist der Information 15 zugewiesen. Zwar befindet sich der Zeitpunkt T16 noch in dem vorgegebenen Pausenintervall zwischen dem Zeitpunkt T15 und T17 anschließend an die Informationsausgabe der Information I4, jedoch wird die Pause durch die Ausgabe der Information 15 unterbrochen. Die Information 15 wird von dem Zeitpunkt T16 bis zu dem Zeitpunkt T18 ausgegeben, wobei sich hieran eine Pause bis zu dem Zeitpunkt T19 anschließt.

Bei dem angegebenen Zeitpunkt des eine Information auslösenden Ereignisses wird zur vereinfachten Darstellung angenommen, unter Vernachlässigung rechnerischer Bearbeitungszeiten, dass das Ereignis nach Entstehen unmittelbar verarbeitet wird und die Informationsausgabe bereitsteht. Der Zeitpunkt des Ereignisses bezeichnet damit den Zeitpunkt, ab dem prinzipiell eine Informationsausgabe möglich wäre.

## Patentansprüche

1. Fahrerinformationsvorrichtung mit einer Ausgabeeinheit zur Ausgabe von Informationen, wobei zwischen der Ausgabe einer ersten und einer zweiten Information eine Pause vorgegebener Länge eingefügt wird, **gekennzeichnet durch** eine Speichereinheit (21) zur Speicherung von Pausenlängen für verschiedene Inhalte von auszugebenden Informationen, Formen von auszugebenden Informationen und/oder Fahrsituationen.

2. Fahrerinformationsvorrichtung nach Anspruch 1, **dadurch gekennzeichnet, dass** die Länge der Pause von dem Inhalt und/oder der Form der ersten und/oder der zweiten Information abhängt.

3. Fahrerinformationsvorrichtung nach einem der vorherigen Ansprüche, **gekennzeichnet durch** eine Bewertungseinheit (24) zur Anpassung der Länge der Pause an eine Fahrsituation.

4. Fahrerinformationsvorrichtung nach einem der vorherigen Ansprüche, **gekennzeichnet durch** eine Regeleinheit (23) zur Beeinflussung der Länge der Pause **durch** einen Benutzer.

5. Fahrerinformationsvorrichtung nach einem der vorherigen Ansprüche, **gekennzeichnet durch** eine Warneinheit (25) zur Beendigung einer vorgegebenen Pause bei einer auszugebenden Warnung, wobei der Warnung eine Berechtigung zur Beendigung der Pause zugewiesen ist.

6. Verfahren zur Ausgabe von Informationen in einem Fahrzeug, wobei eine erste und eine zweite Information ausgegeben werden und wobei zwischen der Ausgabe der ersten Information und der Ausgabe der zweiten Information eine Pause vorgegebener Länge eingefügt wird, **dadurch gekennzeichnet, dass** in einer Speichereinheit (21) Pausenlängen für verschiedene Inhalte von auszugebenden Informationen, Formen von auszugebenden Informationen und/oder Fahrsituationen gespeichert werden.

7. Verfahren nach Anspruch 6, **dadurch gekennzeichnet, dass** die Länge der Pause in Abhängigkeit von dem Inhalt und/oder der Form der ersten und/oder der zweiten Information gewählt wird.

8. Verfahren nach einem der Anspräche 6-7, **dadurch gekennzeichnet, dass** die Länge der Pause in Abhängigkeit von einer Fahrsituation gewählt wird.

## Claims

1. Driver information device having an output unit for outputting information, wherein a pause of a predefined length is inserted between the outputting of a first item of information and the outputting of a second item of information, **characterized by** a memory unit (21) for storing pause lengths for different contents of information which is to be output, forms of information which is to be output and/or driving situations.

2. Driver information device according to Claim 1, **characterized in that** the length of the pause depends on the content and/or the form of the first and/or second information items.

3. Driver information device according to one of the preceding claims, **characterized by** an evaluation unit (24) for adapting the length of the pause to a driving situation.

4. Driver information device according to one of the preceding claims, **characterized by** a control unit (23) for the influencing of the length of the pause by a user.

5. Driver information device according to one of the preceding claims, **characterized by** a warning unit (25) for ending a predefined pause in the case of a warning which is to be output, wherein an authorization for ending the pause is assigned to the warning.

6. Method for outputting information in a vehicle, wherein a first information item and a second information item are output, and wherein a pause of a predefined length is inserted between the outputting of the first information item and the outputting of the second information item, **characterized in that** pause lengths for different contents of information which is to be output, forms of information which is to be output and/or driving situations are stored in a memory unit (21).

7. Method according to Claim 6, **characterized in that** the length of the pause is selected as a function of the content and/or the form of the first information item and/or the second information item.

8. Method according to one of Claims 6-7, **characterized in that** the length of the pause is selected as a function of a driving situation.

## Revendications

1. Dispositif d'information du conducteur comprenant une unité d'affichage destinée à afficher des informations, dans lequel une pause d'une longueur prédéterminée est insérée entre les affichages d'une première et d'une deuxième informations, **caractérisé par** une unité à mémoire (21) destinée à mémoriser des longueurs de pause pour différents contenus d'informations à afficher, différentes formes d'informations à afficher et/ou différentes situations de conduite.

2. Dispositif d'information du conducteur selon la revendication 1, **caractérisé en ce que** la longueur de la pause dépend du contenu et/ou de la forme de la première et/ou de la deuxième information.

3. Dispositif d'information du conducteur selon l'une des revendications précédentes, **caractérisé par** une unité d'évaluation (24) destinée à adapter la longueur de la pause à une situation de conduite.

4. Dispositif d'information du conducteur selon l'une des revendications précédentes, **caractérisé par** une unité de commande (23) destinée à modifier la longueur de la pause par l'intermédiaire d'un utilisateur.

5. Dispositif d'information du conducteur selon l'une des revendications précédentes, **caractérisé par** une unité d'avertissement (25) destinée à interrompre une pause prédéterminée lors d'un avertissement à afficher, dans lequel une autorisation d'interruption de la pause est affectée à l'avertissement.

6. Procédé d'affichage d'informations dans un véhicule, dans lequel une première et une deuxième informations sont affichées et dans lequel une pause de longueur prédéterminée est insérée entre l'affichage de la première information et l'affichage de la deuxième information, **caractérisé en ce que** des longueurs de pauses sont mémorisées dans une unité à mémoire (21) pour différents contenus d'informations à afficher, différentes formes d'informations à afficher et/ou différentes situations de conduite.

7. Procédé selon la revendication 6, **caractérisé en ce que** la longueur de la pause est sélectionnée en fonction du contenu et/ou de la forme de la première et/ou de la deuxième information.

8. Procédé selon l'une des revendications 6 à 7, **caractérisé en ce que** la longueur de la pause est sélectionnée en fonction d'une situation de conduite.
